# EUROPÄISCHE PATENTSCHRIFT

(11) **EP 2 580 848 B1**
(45) Veröffentlichungstag und Bekanntmachung des Hinweises auf die Patenterteilung: **24.06.2015**
(21) Anmeldenummer: 11717660.2
(22) Anmeldetag: 06.05.2011
(51) Int. Cl.: H02K 9/19, H02K 5/18, H02K 7/18, H02K 9/10, H02K 5/20

(54) **DYNAMOELEKTRISCHE MASCHINE MIT LUFT-FLÜSSIGKEITSKÜHLUNG**
DYNAMOELECTRIC MACHINE HAVING AIR/LIQUID COOLING
MACHINE DYNAMOÉLECTRIQUE ÉQUIPÉE D'UN SYSTÈME DE REFROIDISSEMENT D'AIR/DE LIQUIDES

(30) Priorität: 11.06.2010 DE 102010029986
(43) Veröffentlichungstag der Anmeldung: 17.04.2013
(73) Patentinhaber: Siemens Aktiengesellschaft, 80333 München (DE)
(72) Erfinder: MEMMINGER, Oliver, 94127 Neuburg A.D. Inn (DE); SCHÖBERL, Friedrich, 94099 Ruhstorf a.d. Rott (DE)
(86) Internationale Anmeldenummer: PCT/EP2011/057264
(87) Internationale Veröffentlichungsnummer: WO 2011/154205

(56) Entgegenhaltungen:
- WO-A1-2008/059687
- DE-A1- 3 925 337
- DE-A1- 4 229 395
- DE-A1- 19 635 196
- DE-A1-102008 045 667
- FR-A- 1 000 631
- US-A1- 2002 047 473
- US-A1- 2004 150 270
- US-B1- 7 466 053

## Beschreibung

Die Erfindung betrifft eine dynamoelektrische Maschine mit einem Stator und einem Rotor mit einem geschlossenen Kühlkreislauf.

Zur Kühlung dynamoelektrischer Maschinen werden als Kühlmedien Gase, insbesondere Luft und Flüssigkeiten verwendet. Um eine effiziente Kühlung zu erreichen sind auch Kombinationen dieser Kühlprinzipien in dynamoelektrischen Maschinen vorgesehen.

Aus der DE 299 13 314 U1 ist eine elektrische Maschine mit einem Gehäuse bekannt, mit einem Stator und einem Rotor und einer Wasserkühlung, wobei das Blechpaket des Ständers in ein Gehäuse eingeschrumpft ist und auf der ganzen Paketlänge im Gehäuse aufliegt. Zwischen Innenmantel und Außenmantel ist eine Kühlspirale vorgesehen, wobei der radial außerhalb vorgesehene Luftführungsmantel ein geschlossenes System darstellt.

Nachteilig dabei ist, dass der Innenumluftstrom mittels Innenlüfter auf den Luftführungsmantel geführt wird, der den Innenluftstrom über Kühlrippen leitet. Der Luftführungsmantel wird dabei so heiß, wie die Luft, die aus dem Läufer kommt. Diese heißen Bereiche stellen insbesondere ein großes Problem in beengten Platzverhältnissen z.B. in Gondeln von Windkraftgeneratoren für das Wartungspersonal dar.

Zusätzlich heizt sich die Umgebung der dynamoelektrischen Maschine durch die abgegebene Wärme zusätzlich auf. Auch ist die Kühleffizienz der einen derartigen Ausführung begrenzt, da der von Kühlwasser umspülte Teil des Stators nur ein Bruchteil der gesamten Länge des Gehäuses einnimmt.

Aus der DE 196 35 196 A1 ist ein Elektromotor mit einem als Blechpaket ausgeführten Stator bekannt, der ein Wicklungssystem aufweist, das an den Stirnseiten des Stators Wickelköpfe ausbildet und einem als Blechpaket ausgeführten Rotor, der mit einer Welle drehfest verbunden ist, wobei Stator und Rotor in einem Gehäuse angeordnet sind, wobei die Welle über Lager, die in Lagerschilden angeordneten sind, gelagert ist, wobei das Blechpaket von Stator und/oder Rotor axial verlaufende Kühlkanäle aufweist, wobei die Lagerschilde zusammen mit dem Gehäuse einen geschlossenen Innenraum bilden, der zumindest einen geschlossenen Innenkühlkreislauf aufweist, wobei das Gehäuse einen Außenmantel und einen davon abschnittsweise beabstandeten zum Stator weisenden Innenmantel aufweist, wobei Außenmantel und Innenmantel zusammengesetzt einen Kühlmantel, insbesondere einen Flüssigkeitskühlmantel bilden, dessen axiale Ausdehnung zumindest der axialen Ausdehnung des Blechpakets des Stators entspricht.

Aus der US 2002/0047473 A1 ist ein Kühlmantel beschrieben, der sich durch Zusammensetzen von einzelnen Bauelementen ergibt.

In der FR 1 000 631 A weist die elektrische Maschine einen Kühlmantel eines Stators auf, der axial verlaufende Kühlrippen aufweist.

Aus der DE 39 25 337 A1 ist eine dynamoelektrische Maschine mit geschichteten Teilblechpaketen bekannt, die radiale Kühlschlitze von Stator und Rotor aufweist und bei der sich die axialen Abstände benachbarter Teilblechpakete zur Mitte des Blechpakets hin verringern.

Aus der US 7 466 053 B1 ist eine dynamoelektrische Maschine bekannt, mit einem geschlossenen Innenkühlkreislauf, bei der ein Kühlmantel den Stator umgibt, der vom Rücken des Statorblechpakets beabstandet ist.

Aus der DE 42 29 395 A1 ist eine oberflächengekühlte, geschlossene elektrische Maschine bekannt, bei der Luftleitelemente im Innenraum der dynamoelektrischen Maschine vorgesehen sind, um den Luftstrom vor Eintritt in axiale Kühlkanäle des Stators über einen Wickelkopf des Wicklungssystems zu führen.

Aus der DE 10 2008 045 667 A1 ist eine dynamoelektrische Maschine bekannt, bei der ein den Stator umgebenden Kühlmantel auf der dem Luftspalt abgewandten Seite des Stators mit im wesentlichen axial verlaufenden Aufnehmung des Kühlmantels versehen ist, wobei die Ausnehmungen mit Kühlschläuchen versehen sind und wobei zumindest axiale Abschnitte diese Ausnehmung zum Rücken des Stators hin offen sind.

Aus der WO 2008/059687 A1 ist eine rotatorische dynamoelektrische Maschine bekannt, bei der ein geschlossener Innenkühlkreislauf vorliegt, wobei die Kühlkanäle des Innenkühlkreislaufes und Kühlkanäle eines externen äußeren Kühlkreislaufes auf demselben Radius angeordnet sind.

Aus der US 2004/0150270 A1 ist eine dynamoelektrische Maschine bekannt, bei der ein Innenkühlkreislauf und ein äußerer Luftkühlkreislauf vorgesehen sind.

Ausgehend davon liegt der Erfindung die Aufgabe zugrunde, eine dynamoelektrische Maschine zu schaffen, die insbesondere für beengte Platzverhältnisse zum einen für eine ausreichende Kühlung sorgt und gleichzeitig keine Gefährdung bei beengten Platzverhältnissen für Wartungspersonal darstellt, wie sie z.B. in Windkraftgondeln vorhanden sind.

Die Lösung der gestellten Aufgabe gelingt dadurch, dass am Außenumfang des Blechpakets des Stators, also am Jochrücken sich Auflagepunkte des Innenmantels befinden, der radial nach innen weisende im Wesentlichen axial verlaufende Kühlrippen aufweist, die nicht am Jochrücken anliegen.

Durch die erfindungsgemäße Anordnung ist nunmehr die Temperatur des Gehäuses für Wartungspersonal unkritisch, da der Kühlmantel somit nur die maximal zulässige Kühltemperatur aufweist.

Um die Kühleffizienz des Kühlmantels weiter zu steigern, weist der Innenmantel zum Außenumfang des Stators axial verlaufende Kühlrippen auf, die somit die Wärmeübergangsfläche des Kühlmantels vergrößern. Diese Rippen und damit der Innenmantel stützen sich am Außenumfang des Stators nur an vorgegebenen Auflagepunkten ab, die aber die Kühlleistung nicht mindern. Diese Kühlrippen sind an der Innenseite des Innenmantels angeschweißt oder angegossen.

Um die Kühleffizienz weiter zu steigern, wird die gesamte Länge des Gehäuses des Stators zur Rückkühlung der Innenluft zu nutzen. Des Weiteren kann nunmehr die gesamte Außenfläche des Innenmantels mit Kühlwasser umspült werden, damit wird die Kühleffizienz wesentlich erhöht. An der Außenfläche des Innenmantels zwischen Innenmantel und Außenmantel zirkuliert Flüssigkeit in dem nunmehr gebildeten Kühlmantel. Die Kühlkanäle des Kühlmantels verlaufen entweder spiralförmig oder mäanderförmig um den Innenraum des dynamoelektrischen Maschine. Um einen möglichst dichten Kühlmantel zu erhalten, sind Außenmantel und Innenmantel in einem thermischen oder hydraulischen Schrumpfungsprozess zusammengefügt.

Der prinzipielle Aufbau zeigt nunmehr, dass sich die Flüssigkeitskühlung radial außen befindet, während die Kühlrippen zur Rückkühlung der zirkulierenden Innenluft zwischen Jochrücken des Stators und dem Flüssigkeitskühlmantel angeordnet sind.

Aus diesem Grund wird nunmehr die Oberflächentemperatur der dynamoelektrischen Maschine im Betrieb nie höher als die maximal zulässige Kühlwassertemperatur der dynamoelektrischen Maschine. Damit wird ein Aufheizen der Umgebung und anderer Geräte, insbesondere in einer beegten Windkraftgondel zusätzlich verhindert. Heiße Oberflächen an der dynamoelektrischen Maschine sind somit ebenfalls vermieden und das Wartungspersonal weniger gefährdet.

Vorteilhafterweise werden mit einer Druckfingeranordnung, also speziellen Zwischenelementen, zwischen den Teilblechpaketen von Stator und Rotor radiale Kühlkanäle geschaffen. Idealerweise fluchten diese Kühlkanäle von Rotor und Stator in radialer Richtung, so dass der Luftstrom aus einem axial verlaufenden Kühlkanal des Rotors und Eintritt in den radialen Kühlkanal passieren des elektromagnetischen Luftspalts in einen radialen Kühlschlitz des Stators eintritt und dann an der Außenumfang des Blechpakets des Stators wieder austritt und auf den Kühlmantel prallt und dort rückgekühlt wird.

Idealerweise wird dieser Umlauf der Innenluft durch natürliche Konvektion geschaffen also ohne einen Lüfter erreicht, um aber eine zusätzliche Luftumwälzung zu erreichen, ist an einer Welle zumindest ein Lüfter vorgesehen.

Vorteilhafterweise sind Luftleitelemente innerhalb des Innenkühlkreislaufs angeordnet, so dass zusätzlich eine ausreichende Kühlung des Wickelkopfes als auch der Lagerschilde erfolgt. Damit ist nicht nur die zylinderförmige Außenfläche der dynamoelektrischen Maschine für Wartungspersonal unkritisch, sondern auch die an den Stirnseiten der dynamoelektrischen Maschine vorhandenen Lagerschilde sind damit thermisch unkritisch. Dies führt zu einer gleichzeitigen Kühlung der Lager, so dass dort die Gefahr der Fettzersetzung aufgrund übermäßiger Temperatur vermindert ist.

Die Erfindung sowie weitere vorteilhafte Ausgestaltungen der Erfindung werden anhand eines prinzipiell dargestellten Ausführungsbeispiels näher erläutert. Darin zeigen:
- FIG 1: einen Teillängsschnitt einer dynamoelektrischen Maschine,
- FIG 2: einen Teilquerschnitt einer dynamoelektrischen Maschine.

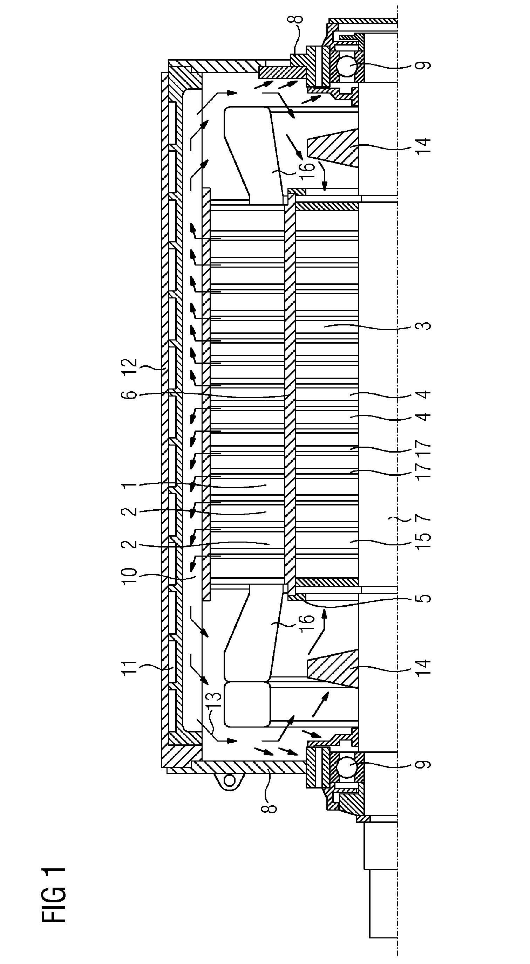

FIG 1 zeigt in einem Teillängsschnitt eine dynamoelektrische Maschine, wie sie insbesondere für Windkraftgeneratoren eingesetzt wird.

Ein Stator 1, dessen Blechpaket aus Teilblechpaketen 2 aufgebaut ist, weist ein nicht näher dargestelltes Wicklungssystem auf, das in Nuten angeordnet ist, so dass sich an den Stirnseiten des Blechpakets des Stators 1 Wickelköpfe 16 ausbilden. Durch einen nicht näher dargestellten Luftspalt vom Stator 1 beabstandet, ist in radialer Richtung ein Rotor 3 angeordnet, der auf eine Welle 7 drehfest positioniert ist, insbesondere aufgeschrumpft oder durch Passfederverbindungen mit dieser verbunden ist.

Der Rotor 3 ist im vorliegenden beispielhaften Fall als Kurzschlussläufer ausgeführt und weist aus diesem Grund Kurzschlussstäbe 6 auf, die an den Stirnseiten des Rotors 3 über Kurzschlussringe 5 miteinander elektrisch leitend verbunden sind.

Der Rotor 3 weist ebenfalls ein Blechpaket auf, das in Teilblechpakete 4 unterteilt ist. Die Teilblechpakete 2 des Stators 1 und die Teilblechpakete 4 des Rotors 3 sind durch Zwischenelemente 17 voneinander axial beabstandet und zwar derart, dass sich zwischen den Teilblechpaketen 2 und 4 radiale Kühlschlitze ergeben.

Vorteilhafterweise sind diese radialen Kühlschlitze von Stator 1 und Rotor 3, wie in FIG 1 dargestellt, radial fluchtend angeordnet. Somit tritt ein Kühlluftstrom 13, der aufgrund natürlicher Konvektion oder durch einen Lüfter 14 axial angetrieben ist, in axial verlaufenden Kühlkanäle 15 von Rotor 3 und/oder Stator 1. Nach jedem Teilblechpaket wird ein Teil des axial eintretenden Luftstroms radial ausgelenkt. Die dabei umgelenkte Luftmenge ist durch geeignete Dimensionierung von Zwischenelementen 17 und Durchmessern der axialen Kühlkanäle 15 so gewählt, dass sich über die axiale Länge von Rotor 3 und/oder Stator 1 eine gleichmäßige Temperaturverteilung im Betrieb der dynamoelektrischen Maschine einstellt.

Die aus dem Rotor 3 radial austretenden bereits erwärmten Luftmengen treten über den Luftspalt der dynamoelektrischen Maschine in die jeweils gegenüber liegend radialen Kühlschlitze des Stators 1. Dort wird die Luft weiter aufgeheizt und tritt radial aus dem Stator 1 aus. Falls der Stator 1 axial verlaufende Kühlkanäle aufweist, tritt in den radialen Kühlschlitzen des Stators 1 außerdem eine Vermischung der Luftmengen ein.

Über die Kühlrippen 10 des Innenmantels 19 tritt eine Rückkühlung der radial austretenden Luftmengen auf.

Je weiter sich der Innenmantel 19 axial erstreckt und somit zusammen mit dem Außenmantels 12 den Kühlmantel 11 bildet, desto besser ist die Rückkühlung des Innenluftströme.

Die axiale Ausdehnung des Kühlmantels 11 sollte zumindest der axialen Ausdehnung des Stators 1 entsprechen. Wesentlich besser geeignet ist die Ausdehnung des Kühlmantels von einem Wickekopfende zum anderen oder gar über die gesamte axiale Länge der dynamoelektrischen Maschine, d.h. von einem Lagerschild 12 zum anderen.

Das vermindert zugleich die Gefahr einer Verbrennung am Gehäuse.

Da mit Eintritt in das Blechpaket des Rotors 3 und/oder Stators 1 die rückgekühlte Kühlluft bereits wieder Wärme aufnimmt und somit die Kühleffizienz zur Mitte der Blechpakete abnimmt, werden vorteilhafterweise die Abstände der Zwischenelemente 17 zur Mitte hin verringert. Dies steigert die Kühleffizienz der gesamten dynamoelektrischen Maschine.

Vorteilhafterweise ist die dynamoelektrische Maschine zweiflutig ausgeführt, d.h. sowohl auf der linken als auch auf der rechten Seite wird eine Kühlung des Luftstroms durchgeführt, so dass axial mittig von Stator 1 und Rotor 3 Mittel zur Trennung des Luftstroms vorgesehen sind. Dies führt zu einer weiteren Steigerung der Kühleffizienz der dynamoelektrischen Maschine.

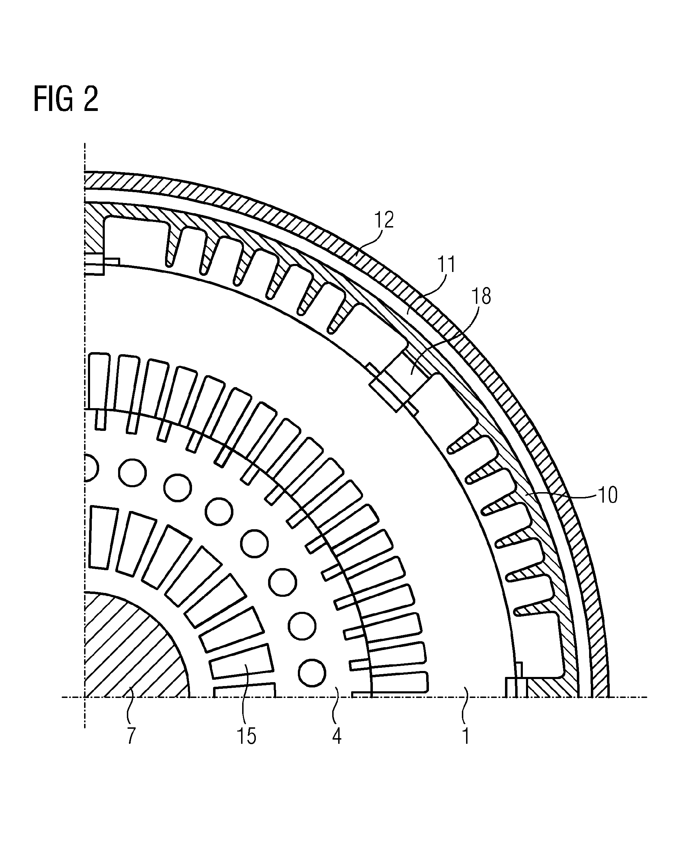

FIG 2 zeigt in einem Teilquerschnitt den Aufbau der dynamoelektrischen Maschine, wobei der Rotor 3 mit seinem Teilblechpaketen 4 auf der Welle 7 positioniert ist. Jedes Teilblechpaket weist Kühlkanäle 15 auf, die vorteilhafterweise axial fluchten. An den Rotor 3 schließt sich radial nach außen das Blechpaket des Stators 1 an, das Nuten aufweist, in denen sich ein Wicklungssystem befindet.

Am Außenumfang des Blechpakets des Stators 1, also am Jochrücken befinden sich Auflagepunkte 18 des Innenmantels 19, der radial nach innen weisende im Wesentlichen axial verlaufende Kühlrippen 10 aufweist. Die Auflagepunkte 18 beispielsweise in Form von Laschen realisiert, sind am Umfang des Jochrückens verteilt, beispielsweise sind drei Auflagepunkte 18 jeweils um 120 Grad versetzt angeordnet. In axialer Richtung des Stators 1 sind in einem vorgegeben axialen Abstand weitere Auflagepunkte 18 vorzusehen. Alternativ sind die Auflagepunkte 18 als axial verlaufende Leisten ausgeführt, die vorteilhafterweise Durchbrüche aufweisen. Die Durchbrüche einer Leiste sind entweder auf der radial inneren Seite und/oder radial äußeren Seite, so dass sich entweder eine kammartige Gestaltung oder ein alternierender Wechsel der Durchbrüche an Innen- und Außenseite ergibt.

Die Durchbrüche gewährleisten ebenso wie die nahezu punktuellen Auflagepunkte 18 auch eine Luftströmung mit einer Komponente in Umfangsrichtung. Damit ist eine gleichmäßige Kühlung der dynamoelektrischen Maschine in axialer Richtung und in Umfangsrichtung gewährleistet.

Die Kühlrippen 10 liegen dabei jeweils nicht am Jochrücken an.

Der durch Innenmantel 19 und Außenmantel 12 gebildete Kühlmantel 11, kühlt die aus dem Blechpaket des Stators 1 austretende Luft. Die Kühlwirkung verstärkt sich durch die an dem Innenmantel 19 vorhandenen Kühlrippen 10, aufgrund der oberflächenvergrößernden Struktur des Innenmantels 19.

Die aus dem Stator 1 strömende Luft wird durch Entlangstreichen an den Kühlrippen 10 des Innenmantels 19 in Richtung Lagerschilde durch den Kühlmantel 11 abgekühlt. Diese abgekühlte Luft strömt an oder durch den Wickelkopf 16 und/oder der Innenseite des Lagerschildes 8 wieder in die axialen Kühlkanäle von Rotor 3 und/oder Stator 1.

## Patentansprüche

1. Dynamoelektrische Maschine, insbesondere Windgenerator mit einem als Blechpaket ausgeführten Stator (1) mit einem Wicklungssystem, das an den Stirnseiten des Stators (1) Wickelköpfe (16) ausbildet und einem als Blechpaket ausgeführten Rotor (3), der mit einer Welle (7) drehfest verbunden ist, wobei Stator (1) und Rotor (3) in einem Gehäuse angeordnet sind,
wobei die Welle (7) über Lager (9), die in Lagerschilden (8) angeordnet sind gelagert ist,
wobei das Blechpaket von Stator (1) und/oder Rotor (3) axial verlaufende Kühlkanäle (15) aufweist,
wobei die Lagerschilde (8) zusammen mit dem Gehäuse einen geschlossenen Innenraum bilden, der zumindest einen geschlossenen Innenkühlkreislauf aufweist,
wobei das Gehäuse einen Außenmantel (12) und einen davon abschnittsweise beabstandeten zum Stator (1) weisenden Innenmantel (19) aufweist,
wobei Außenmantel (12) und Innenmantel (19) zusammengesetzt einen Kühlmantel (11), insbesondere einen Flüssigkeitskühlmantel bilden, dessen axiale Ausdehnung zumindest der axialen Ausdehnung des Blechpakets des Stators (1) entspricht, **dadurch gekennzeichnet, dass** am Außenumfang des Blechpakets des Stators (1), also am Jochrücken sich Auflagepunkte (18) des Innenmantels (19) befinden, der radial nach innen weisende im Wesentlichen axial verlaufende Kühlrippen (10) aufweist, die nicht am Jochrücken anliegen.

2. Dynamoelektrische Maschine nach Anspruch 1, **dadurch gekennzeichnet, dass** Außenmantel (12) und/ oder Innenmantel (19) derart ausgebildet sind, dass durch eine axiale Zusammensetzung von Außenmantel (12) und Innenmantel (19) sich ein mäanderförmiger oder spiralförmiger Verlauf von sich ergebenden Kühlkanälen in dem Kühlmantel (11) ergibt.

3. Dynamoelektrische Maschine nach Anspruch 1 oder 2, **dadurch gekennzeichnet, dass** das Blechpaket des Stators (1) und/oder das Blechpaket des Rotors (3) jeweils geschichtete Teilblechpakete (2,4) aufweisen, die durch geeignete Zwischenelemente (17) axial voneinander getrennt sind und somit das Blechpaket des Stators (1) und das Blechpaket des Rotors (3) jeweils radiale Kühlschlitze aufweist.

4. Dynamoelektrische Maschine nach Anspruch 3, **dadurch gekennzeichnet, dass** zumindest einige der radialen Kühlschlitze von Stator (1) und Rotor (3) radial fluchten.

5. Dynamoelektrische Maschine nach Anspruch 3 oder 4, **dadurch gekennzeichnet, dass** sich der axiale Abstand axial benachbarter Teilblechpakete (2,4) zur Mitte des Blechpakets vergrößert oder dass sich der Abstand axial hintereinander angeordneter Zwischenelemente (17) zur Mitte der Blechpakte hin verringert.

6. Dynamoelektrische Maschine nach einem der vorhergehenden Ansprüche, **dadurch gekennzeichnet, dass** der Innenkühlkreislauf zweiflutig ausgeführt ist, derartig, dass das Blechpaket des Stators (1) und das Blechpaket des Rotors (3) Mittel zur Trennung aufweist, um so die Zweiflutigkeit zu schaffen.

7. Dynamoelektrische Maschine nach einem der vorhergehenden Ansprüche, **dadurch gekennzeichnet, dass** die Lagerschilde (8) oberflächenvergrößernde Strukturen aufweisen.

8. Dynamoelektrische Maschine nach einem der vorhergehenden Ansprüche, **dadurch gekennzeichnet, dass** Lüfter (14) und/oder Luftleitelemente im Innenraum der dynamoelektrischen Maschine angeordnet sind, um so einen Luftstrom vor Eintritt in axiale Kühlkanäle des Stators (1) und/oder Rotors (3) über einen Wickelkopf (16) des Wicklungssystems und/oder Lagerschild (8) zu führen.

## Claims

1. Dynamoelectric machine, in particular a wind generator comprising a stator (1) which is designed as a laminated core and has a winding system, which forms winding heads (16) on the end faces of the stator (1) and a rotor (3) which is designed as a laminated core and which is connected to a shaft (7) in a rotationally fixed manner,
wherein the stator (1) and the rotor (3) are arranged in a housing,
wherein the shaft (7) is supported by means of bearings (9), which are arranged in bearing shields (8),
wherein the laminated core has cooling channels (15) axially extending from the stator (1) and/or rotor (3),
wherein the bearing shields (8) form a closed interior together with the housing, said interior having at least one closed inner cooling circuit,
wherein the housing has an outer jacket (12) and an inner jacket (19) facing the stator (1) and arranged at a distance from the outer jacket in some sections,
wherein the outer jacket (12) and the inner jacket (19) combined form a cooling jacket (11), in particular a liquid cooling jacket, the axial extension of which equals at least the axial extension of the laminated core of the stator (1), **characterised in that** support points (18) of the inner jacket (19) are located on the outer circumference of the laminated core of the stator (1), i.e. on the yoke rear, said inner jacket (19) comprising radially inward-facing substantially axially extending cooling fins (10) which do not lie on the yoke rear.

2. Dynamoelectric machine according to claim 1, **characterised in that** the outer jacket (12) and/or inner jacket (19) are designed such that an axial combination of the outer jacket (12) and the inner jacket (19) results in a meandering or spiral course of the resultant cooling channels in the cooling jacket (11).

3. Dynamoelectric machine according to claim 1 or 2, **characterised in that** the laminated core of the stator (1) and/or the laminated core of the rotor (3) each comprise coated partial laminated cores (2,4), which are separated axially from each other by suitable intermediate elements (17), and hence the laminated core of the stator (1) and the laminated core of the rotor (3) each comprise radial cooling ducts.

4. Dynamoelectric machine according to claim 3, **characterised in that** at least some of the radial cooling ducts are aligned radially from the stator (1) and rotor (3).

5. Dynamoelectric machine according to claim 3 or 4, **characterised in that** the axial spacing of axially adjacent partial laminated cores (2,4) increases toward the centre of the laminated core or that the spacing of intermediate elements (17) arranged axially in series reduces toward the centre of the laminated cores.

6. Dynamoelectric machine according to one of the preceding claims, **characterised in that** the inner cooling circuit has a double-flow design such that the laminated core of the stator (1) and the laminated core of the rotor (3) comprise means for separation in order to provide the double-flow design.

7. Dynamoelectric machine according to one of the preceding claims, **characterised in that** the bearing shields (8) comprise surface-enlarging structures.

8. Dynamoelectric machine according to one of the preceding claims, **characterised in that** fans (14) and/or air conduction elements are arranged in the interior of the dynamoelectric machine in order to guide an air flow over a winding head (16) of the winding system and/or bearing shield (8) prior to entering axial cooling channels of the stator (1) and/or rotor (3).

## Revendications

1. Machine dynamoélectrique, notamment génératrice pour éolienne, comprenant un stator (1) réalisé sous la forme d'un paquet de tôles et ayant un système d'enroulement, qui constitue des têtes (16) d'enroulement sur les côtés frontaux du stator (1), et un rotor (3), qui est constitué sous la forme d'un paquet de tôles et qui solidaire en rotation d'un arbre (7), le stator (1) et le rotor (3) étant disposés dans une carcasse,
dans laquelle l'arbre (7) est porté par des paliers (9), qui sont montés dans des flasques (8),
dans laquelle le paquet de tôles du stator (1) et/ou du rotor (3) a des canaux (15) de refroidissement s'étendant axialement,
dans laquelle les flasques (8) forment, ensemble avec la carcasse, un espace intérieur fermé, qui a au moins un circuit intérieur de refroidissement fermé,
dans laquelle la carcasse a une enveloppe (12) extérieure et une enveloppe (19) intérieure, par endroits à distance de celle-ci et tournée vers le stator (1),
dans laquelle l'enveloppe (12) extérieure et l'enveloppe (19) intérieure rassemblées forment une enveloppe (11) de refroidissement, notamment une enveloppe de refroidissement par du liquide, dont l'étendue axiale correspond au moins à l'étendue axiale du paquet de tôles du stator (1), **caractérisée en ce que**, sur le pourtour extérieur du paquet de tôles du stator (1), donc au dos de culasse, se trouvent des points (18) d'appui de l'enveloppe (19) intérieure, laquelle a des ailettes (10) de refroidissement, tournées radialement vers l'intérieur et s'étendant sensiblement axialement, qui ne s'appliquent pas au dos de culasse.

2. Machine dynamoélectrique suivant la revendication 1, **caractérisée en ce que** l'enveloppe (12) extérieure et/ou l'enveloppe (19) intérieure sont constituées de manière à donner, par une combinaison axiale de l'enveloppe (12) extérieure et de l'enveloppe (19) intérieure, un tracé sinueux ou spiralé de canaux de refroidissement qui en résultent dans l'enveloppe (11) de refroidissement.

3. Machine dynamoélectrique suivant la revendication 1 ou 2, **caractérisée en ce que** le paquet de tôles du stator (1) et/ou le paquet de tôles du rotor (3) ont respectivement des sous-paquets (2, 4) de tôles feuilletées, qui sont séparés axialement les uns des autres par des éléments (17) intermédiaires appropriés et ainsi le paquet de tôles du stator (1) et le paquet de tôles du rotor (3) ont respectivement des fentes de refroidissement radiales.

4. Machine dynamoélectrique suivant la revendication 3, **caractérisée en ce qu'**au moins certaines des fentes de refroidissement radiales sont à affleurement radial du stator (1) et du rotor (3).

5. Machine dynamoélectrique suivant la revendication 3 ou 4, **caractérisée en ce que** la distance axiale de sous-paquets (2, 4) de tôles voisins axialement augmente vers le milieu du paquet de tôles et **en ce que** la distance d'éléments (17) intermédiaires disposés axialement les uns derrière les autres diminue vers le milieu du paquet de tôles.

6. Machine dynamoélectrique suivant l'une des revendications précédentes, **caractérisée en ce que** le circuit de refroidissement intérieur est réalisé à deux flux, de manière à ce que le paquet de tôles du stator (1) et le paquet de tôles du rotor (3) aient des moyens de séparation pour ménager ainsi les deux flux.

7. Machine dynamoélectrique suivant l'une des revendications précédentes, **caractérisée en ce que** les flasques (8) ont des structures d'agrandissement de la surface.

8. Machine dynamoélectrique suivant l'une des revendications précédentes, **caractérisée en ce que** des ventilateurs (14) et/ou des éléments de guidage de l'air sont disposés à l'intérieur de la machine dynamoélectrique, pour conduire ainsi, par une tête (16) d'enroulement du système d'enroulement et/ou par le flasque (8), un courant d'air avant l'entrée dans des canaux de refroidissement axiaux du stator (1) et/ou du rotor (3).
